# FASCICULE DE BREVET EUROPEEN

(11) **EP 1 212 264 B1**
(45) Date de publication et mention de la délivrance du brevet: **02.01.2004**
(21) Numéro de dépôt: 00936939.8
(22) Date de dépôt: 26.05.2000
(51) Int. Cl.: C03C 8/24, C03C 3/066

(54) **COMPOSITIONS DE VERRE**
GLASZUSAMMENSETZUNGEN
GLASS COMPOSITIONS

(30) Priorité: 28.05.1999 FR 9906734
(43) Date de publication de la demande: 12.06.2002
(73) Titulaire: Nachmansohn, Baruch, 06500 Menton (FR)
(72) Inventeur: Nachmansohn, Baruch, 06500 Menton (FR)
(86) Numéro de dépôt international: PCT/FR2000/001432
(87) Numéro de publication internationale: WO 2000/073228

(56) Documents cités:
- EP-A- 0 858 973
- EP-A- 1 006 088
- US-A- 5 252 521
- US-A- 5 733 828
- PATENT ABSTRACTS OF JAPAN vol. 1998, no. 02, 30 janvier 1998 (1998-01-30) -& JP 09 268026 A (NIPPON ELECTRIC GLASS CO LTD), 14 octobre 1997 (1997-10-14)
- PATENT ABSTRACTS OF JAPAN vol. 1998, no. 02, 30 janvier 1998 (1998-01-30) -& JP 09 278483 A (NIPPON ELECTRIC GLASS CO LTD), 28 octobre 1997 (1997-10-28) cité dans la demande
- DATABASE WPI Section Ch, Week 200033 Derwent Publications Ltd., London, GB; Class L01, AN 2000-381974 XP002148197 -& JP 2000 128574 A (NIPPON ELECTRIC GLASS CO), 9 mai 2000 (2000-05-09)
- PATENT ABSTRACTS OF JAPAN vol. 1996, no. 03, 29 mars 1996 (1996-03-29) -& JP 07 291656 A (NIPPON ELECTRIC GLASS CO LTD), 7 novembre 1995 (1995-11-07)
- PATENT ABSTRACTS OF JAPAN vol. 018, no. 233 (C-1195), 28 avril 1994 (1994-04-28) -& JP 06 024797 A (ASAHI GLASS CO LTD), 1 février 1994 (1994-02-01) cité dans la demande

## Description

La présente invention concerne une composition de verre exempte de plomb, destinée en particulier à réaliser des soudures/scellements hermétiques, des revêtements, etc.

Les verres thermiquement dévitrifiables sont utilisés depuis de nombreuses années pour sceller hermétiquement des pièces en verre telles que, par exemple, le cône et le fond en verre des tubes-images de télévision couleur et similaires.

Les compositions de verres de scellement doivent permettre de sceller des substrats sans endommager les constituants desdits substrats, la température de fusion pour le frittage devant, par conséquent, être égale ou inférieure à la température de recuit des composants ou substrats devant être scellés. De plus, la partie plane ou fond en verre étant déjà instrumentée, la température de fusion pour le frittage ne doit pas endommager cette instrumentation.

En outre, la relation existant entre la composition du verre de scellement et les substrats à sceller doit être réalisée sans créer de tensions ou de contraintes nuisibles aux matériaux en contact ou à proximité du verre de scellement. Il est donc nécessaire que le coefficient de cont raction thermique de la composition de verre de scellement soit inférieur au coefficient de contraction thermique des surfaces/des substrats en cours de scellement de telle sorte que le verre de scellement soit soumis à un degré de compression modéré.

De tels verres de scellement se dévitrifient ou cristallisent au moins partiellement pendant l'opération de scellement, ce qui les rend généralement plus robustes mécaniquement que les compositions de scellement pour verres stables telles que décrites en particulier dans US-A-2 889 952.

Cependant, les compositions de verres de scellement dévitrifiables présentent l'inconvénient d'être généralement constituées d'au moins une matrice comportant de l'oxyde de plomb (PbO) dans une proportion de 75 à 85 % en poids, ce qui les rend hautement toxiques et nocives.

On a alors proposé des verres de scellement dont la composition est exempte de cet oxyde de plomb.

Dans US-A-5 733 828, on a proposé une composition de scellement hermétique comprenant une poudre de verre constituée essentiellement de bismuth et d'une poudre de charge céramique à faible dilatation, dont le point de ramollissement est inférieur à 500°C et dont le coefficient de dilatation thermique est compris entre 65.10⁻⁷ et 100.10⁻⁷/°C pour une plage de températures allant de la température ambiante à 250°C.

La poudre de verre représentant de 60 à 99 % de la composition est constituée de 77 à 95 % en poids de Bi₂O₃, de 1 à 20 % de MgO + ZnO, de 2 à 10 % de B₂O₃, de 0 à 1 % de SiO₂ et de 0 à 10 % de CeO₂. La poudre de verre comporte donc toujours les oxydes Bi₂O₃, MgO + ZnO ainsi que B₂O₃ .

Dans JP-A-09278483, on a proposé une composition de verre capable de fondre à une température inférieure à 650°C et utile en particulier pour le scellement, et qui ne contient pas de plomb. Cette composition est constituée de 20-80 % de Bi₂O₃, 5-35 % de B₂O₃, 0,1-20% de ZnO, 0-30 % de SrO, 0-35 % de BaO, 5-40 % de BaO + SrO, 0-10 % de CaO, 0-5 % de Fe₂O₃, 1-10 % de CuO, 0-8 % de SiO₂, 0-5 % de Al₂O₃ , 0-5 % de Cs₂O, 0-5 % de F₂. Ces compositions prévoient au moins les oxydes Bi₂O₃, B₂O₃, ZnO ainsi que BaO + SrO. Ces compositions présentent des températures de scellement inférieures ou égales à 650°C qui restent trop élevées.

De même, JP-A-06 24797, EP-A-0 858 973 et US-A-5 252 521 ont proposé des compositions de verre de scellement comprenant majoritairement du bismuth sans plomb ou autre oxyde toxique, mais qui présentent des températures de ramollissement trop élevées, c'est-à-dire supérieures à 500°C.

La présente invention a, par conséquent, pour but de proposer une nouvelle composition de verre, en particulier pour le scellement ou pour constituer un revêtement, qui soit sans oxyde de plomb et qui permet d'obtenir une soudure/scellement à des températures relativement basses ou un revêtement de très bonne qualité.

A cet effet, l'invention a pour objet une composition de verre thermiquement dévitrifiable hermétique, selon la définition de la revendication 1.

De manière avantageuse, une telle composition est, par conséquent, thermiquement dévitrifiable, exempte d'oxyde de plomb, est également non agressive, non corrodante, tout en permettant de sceller hermétiquement ou de revêtir des substrats, des composants industriels ou de tout autre type en verre, en céramique, en divers métaux, en alliage, en vitrocéramique ou en des combinaisons desdits substrats mentionnés.

De manière avantageuse, l'oxyde de strontium (SrO), qui est un oxyde non toxique, confère une excellente adhérence et ténacité à la composition utilisée en tant que composition de scellement, assurant au joint de scellement une amélioration significative de sa résistance mécanique ainsi qu'une meilleure résistance du scellement réalisé par rapport aux agressions chimiques et à l'humidité.

Aux cinq oxydes constituant obligatoirement la matrice de base de la composition, on peut également ajouter d'autres composés oxydes ou non oxydes tels que le Li₂O, l'α-sialon, le β-sialon, le P₂O₅, le Sb₂O₄, le Sb₂O₃, le MoO₃, le BaO, le CuO, le Nb₂O₅, le Si₃N₄, le SiCrO₄, le SrB₂O₄, le SrMoO₄, le SrWO₄.

De préférence, ces composés sont ajoutés dans une proportion de 0,1 à 60 % en poids de la matrice de base en fonction des applications de la composition de verre, avec une préférence pour la plage de 0,1 à 55 %.

On peut ajouter également à la matrice de base un ou plusieurs autres additifs particulaires réfractaires inertes (oxydes ou non oxydes) et non solubles dans la matrice de base, présentant de préférence une granulométrie égale ou inférieure à 22 µm et en faibles quantités, de préférence dans la plage de 0,1-25 % en poids de la masse totale, qui permettent de conférer certaines propriétés thermiques et mécaniques à la composition, telles que : l'ajustement du coefficient de dilatation linéique, l'amélioration de l'adhésivité, la durabilité, la ténacité, le fluage et la mouillabilité du ou des substrats, lesdits additifs étant transformés par fusion en un mélange intime.

On choisit les additifs particulaires réfractaires inertes parmi des composés tels que β-eucryptite, β-spodumene, cordiérite, orthosilicate de zinc, métasilicate de zinc, zircone, silicate de zircone, ZnZrSiO₅, titanate d'aluminium, α-sialon, β-sialon, quartz fondu et nitrure de silicium.

Ces additifs réfractaires (β-eucryptite, β-spodumene, cordiérite, orthosilicate de zinc, métasilicate de zinc, zircone, silicate de zircone, ZnZrSiO₅, titanate d'aluminium, quartz fondu et nitrure de silicium) sont mélangés à sec et à la température ambiante à la matrice de base.

L'addition d'additifs réfractaires inertes permet, de manière avantageuse; de faire varier le coefficient de dilatation linéique de la composition, de préférence dans une plage de 60.10⁻⁷/°C à 100.10⁻⁷/°C. Ces composés particulaires réfractaires inertes présentent un coefficient de dil atation linéique d'au moins 25.10⁻⁷/°C, inférieur à celui de la matrice de base. Ainsi, dans le cas d'une composition de scellement, le coefficient de dilatation linéique peut être ajusté par rapport à celui des substrats devant être scellés.

La composition de verre dévitrifiable ainsi obtenue est dénommée également « fritte ».

L'addition de charges particulaires et inertes (les réfractaires) permet une modification de structure in situ, lors de la fusion de la composition selon l'invention. En particulier, l'addition d'α-sialon ou de β-sialon, de nitrure de silicium, de titanate d'aluminium dans des quantités mineures, de préférence inférieures à 0,5% en poids de la masse totale, modifie de manière significative le comportement rhéologique de la composition de verre de scellement ou de revêtement, à savoir le fluage et la mouillabilité du ou des substrats devant être scellés ensemble ou revêtus.

Selon une forme de réalisation, la matrice de base comporte au moins les cinq oxydes suivants dans les proportions suivantes : de 60 à 85% en poids de Bi₂O₃, de 5 à 25 % en poids de ZnO, de 1 à 5 % en poids de SrO, de 0,5 à 5% en poids de SiO₂ et de 5 à 20% en poids de B₂O₃.

De manière avantageuse, une composition selon cette forme de réalisation de l'invention présente une température de ramollissement inférieure à 500°C et, de préférence, inférieure ou égale à 460°C et constitue une excellente composition de soudure/scellement hermétique. Une telle composition de verre de scellement est particulièrement avantageuse pour sceller, par exemple, des substrats instrumentés, la température relativement basse de fusion (frittage) évitant un endommagement de cette instrumentation.

La présente invention concerne également un procédé de fabrication d'une composition de verre selon la présente invention, caractérisé en ce qu'on chauffe la matrice de base, on refroidit ladite matrice fondue dans un bain-marie jusqu'à la température ambiante, ladite matrice fondue et refroidie est ensuite concassée et broyée jusqu'à une granulométrie inférieure ou égale à 22 µm, on mélange à ladite matrice broyée, à sec et à température ambiante, un ou plusieurs composés particulaires oxydes ou non oxydes réfractaires inertes et le mélange obtenu est, de préférence, ensuite mélangé avec un milieu de support de manière à constituer une phase pâteuse.

De manière avantageuse, la fusion peut être réalisée dans des creusets en alumine, en silice fondue ou en mullite fondue ou similaires, ce qui est plus avantageux que les creusets en platine.

Selon une première variante, le milieu de support est un véhicule organique constitué, par exemple, de nitrocellulose et d'acétate d'amyle.

Selon une seconde variante, le milieu de support est un véhicule non organique tel que de l'eau.

Une composition de verre selon l'invention permet le scellement hermétique de grandes surfaces de verres transparents du type sodocalcique ou similaire et de géométries appropriées constituant après scellement un double vitrage hermétique présentant des qualités d'absorption des agressions thermiques et sonores environnantes.

La composition de verre selon l'invention est particulièrement appropriée pour réaliser le scellement hermétique entre le fond de verre préalablement instrumenté et le cône constituant l'enveloppe d'un tube à rayons cathodiques (CRT) ou similaire, tel que tube radar, tube à rayons X, tube à radiation nucléaire, tube de Geiger, tube à scintillations, tube à filament, tube à décharge gazeuse.

De plus, la composition selon l'invention est particulièrement avantageuse pour réaliser le scellement de dispositifs de visualisation plats et de grandes dimensions à décharge gazeuse, à plasma (Plasma Display Panel PDP), à cristaux liquides, à micro-pointes, pour l'affichage des images couleurs.

De même, la composition peut également servir à réaliser des boîtiers (« flat pack ») ou autres configurations qui constituent après scellement des dispositifs un composant électronique ou microélectronique de circuits intégrés LIC, MOS (metal oxyde silicone), CCD (charge coupled device), VLSI (very large integrated circuits).

On décrira maintenant l'invention plus en détail en référence au dessin annexé dans lequel :
la figure 1 est un tableau présentant des exemples de compositions de verre selon l'invention ;
la figure 2 est un graphique représentant l'analyse par rayons X par dispersion d'énergie d'un exemple de la composition selon l'invention ;
la figure 3 est un graphique représentant la distribution particulaire d'un exemple de la composition ;
la figure 4 est un graphique représentant un test de résistance mécanique d'un scellement réalisé par un exemple de composition selon l'invention,
la figure 5 représente une vue en plan d'un écran plat pour la visualisation des images couleurs de grandes dimensions (PDP);
la figure 6 représente une vue en coupe selon la ligne A-A de la figure 5 au cours du scellement ;
la figure 7 représente une vue en coupe selon la figure 6 en cours de scellement ;
la figure 8 représente une vue en coupe selon la figure 6 après scellement ;
la figure 9 représente une vue en coupe longitudinale d'un tube à rayons cathodiques ;
la figure 10 représente une vue agrandie selon la ligne de coupe BB de la figure 9 ; et
la figure 11 représente une vue en coupe d'un boîtier électronique (flat pack).

La composition de scellement selon l'invention est co nstituée de la matrice de base comprenant au moins les cinq oxydes.

Dans le tableau 1, plusieurs compositions de matrices sont représentées dans lesquelles aux cinq oxydes de base sont ajoutés d'autres oxydes tels que Li₂O et Al₂O₃.

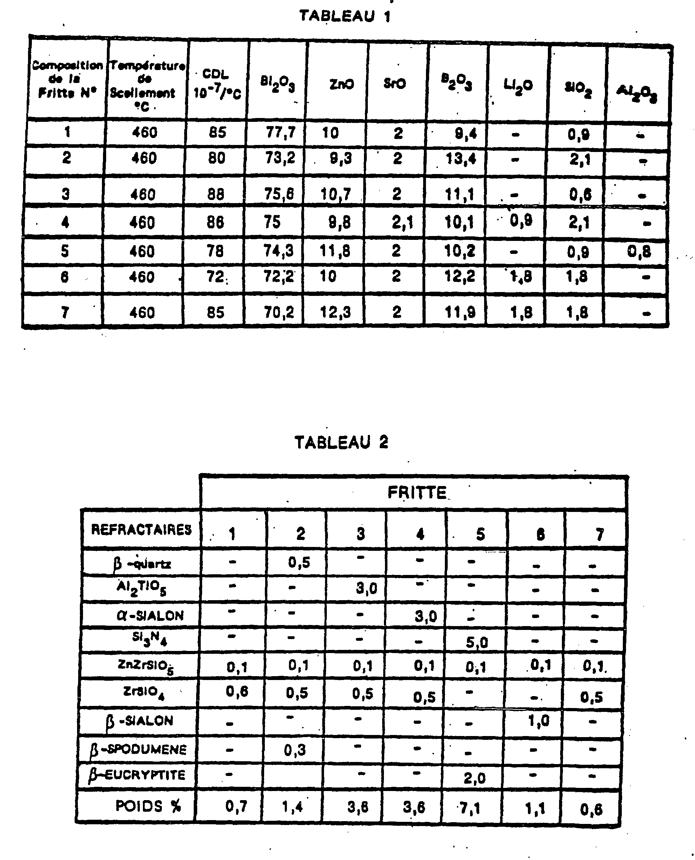

A partir de l'une des matrices représentées à la figure 1, on peut ajouter des réfractaires tels que ZnZrSiO₅ et ZrSiO₄ selon la formule suivante : 99,3 % en poids d'un échantillon avec 0,1 % de ZnZrSiO₅ et 0,6 % de ZrSiO₄. Le mélange des trois phases pulvérulentes est réalisé à sec et à la température ambiante.

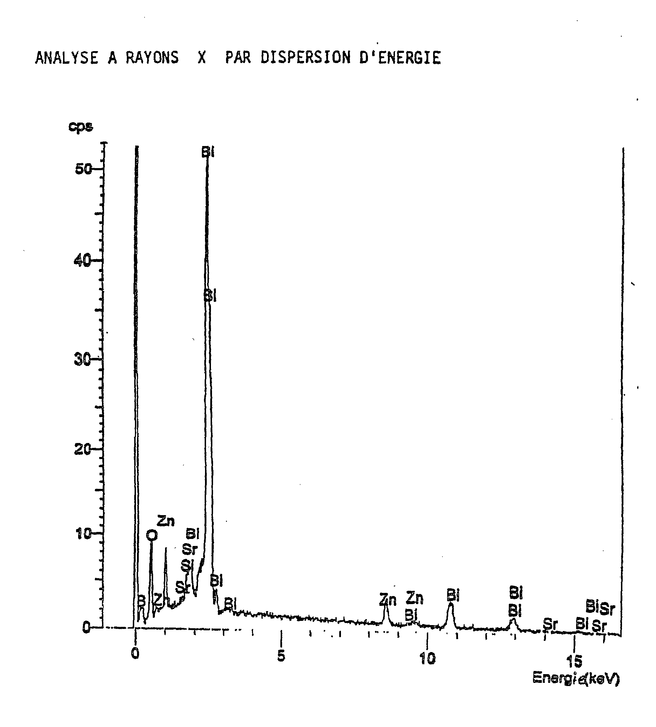

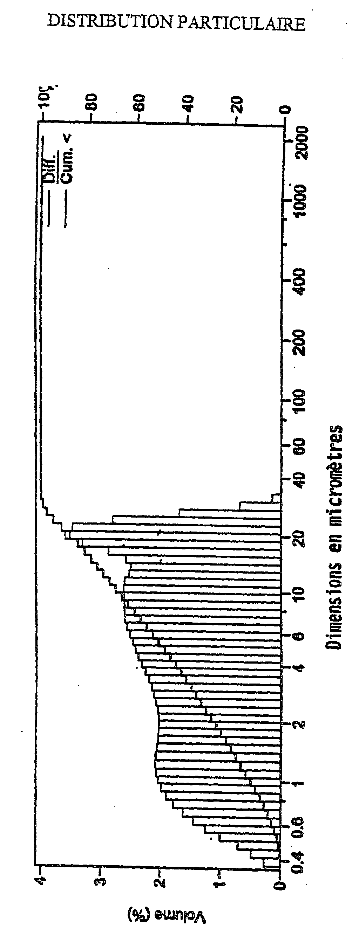

A la figure 2, on peut voir l'analyse aux rayons X par dispersion d'énergie de la composition n°3 de verre de scellement selon l'invention tandis que la figure 3 montre la distribution particulaire de cette composition.

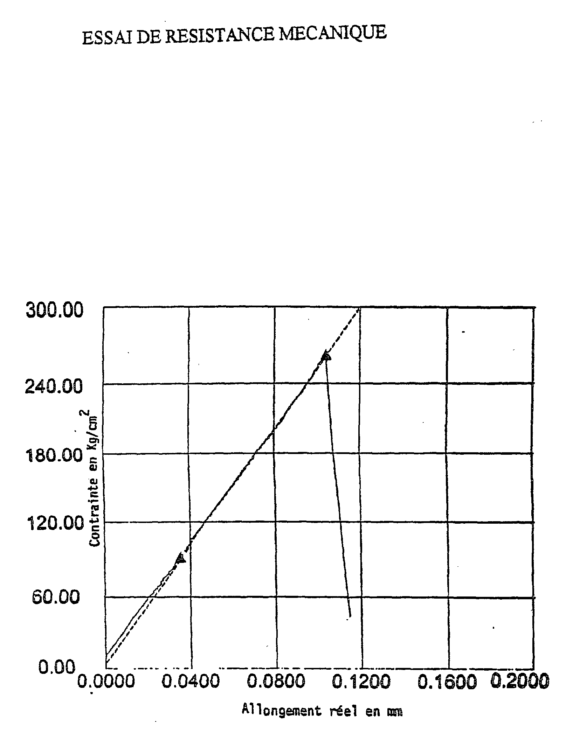

Les compositions selon l'invention présentent des propriétés mécaniques avantageuses telles qu'une bonne résistance à l'allongement, comme cela est visible pour la composition n°3 à la figure 4.

La préparation des compositions de verre est obtenue par le mélange des composants constituant la matrice de base dont la fusion est réalisée dans des creusets en alumine fondue jusqu'à une température avoisinant 820°C et, pour c ertains additifs, jusqu'aux environs de 2300°C.

De préférence, la matrice de base est fondue dans un four programmable, ce qui permet de parfaire un cycle thermique de frittage spécifique.

La matrice de base une fois fondue est versée sous la forme d'un filet dans un récipient métallique qui se trouve immergé dans un récipient d'un plus grand volume également métallique, ce plus grand récipient étant rempli d'eau à la température ambiante.

La matrice de base fondue est refroidie et est alors concassée et broyée puis tamisée de manière à présenter une granulométrie de 22 µm au plus. La distribution particulaire de la composition n°3 du tableau 1 est représentée à la figure 3.

On ajoute alors, à sec et à la température ambiante, un ou plusieurs oxydes ou non oxydes réfractaires inertes préalablement tamisés constituant la charge additionnelle dans une proportion égale ou inférieure à 1 % en poids de la matrice de base.

Une quantité de 1 à 2 % en poids de nitrocellulose est dissoute à 20°C par mélange et agitation à 700 tours/mn pendant 2 à 3 heures avec 98 à 99 % en poids d'acétate d'amyle pour constituer un milieu de support organique véhicule de la fritte préparée.

Ce véhicule organique est mélangé et agité à 20°C et à 45 tours/mn pendant 1 heure avec la fritte de manière à constituer une phase pâteuse pouvant être déposée sur les substrats. Le rapport fritte/véhicule organique peut varier de 5,5 :1 à 7 : 1 en fonction de l'application désirée pour le verre. On peut également utiliser un véhicule non organique tel que de l'eau.

Les compositions 1 à 6 sont utilisées, par exemple pour sceller des écrans plats pour la visualisation d'images couleurs de grandes dimensions (PDP).

Les propriétés synergétiques des diverses compositions, objet de la présente invention ont été validées par analyse thermique différentielle (DTA) et essais calorimétriques à balayage différentiel (DSC).

Ainsi qu'on peut le voir à la figure 5, un écran plat est composé d'un verre plat transparent 1 contre lequel est scellé un second verre plat 2 comportant une cheminée préformée 3, par exemple.

Le verre plat 2 peut comporter une rainure pseudoelliptique dans laquelle est déposée une composition de verre de scellement 4 selon l'invention en phase pâteuse. La composition en phase pâteuse est déposée par dispersion, avec une seringue, un pistolet pneumatique ou similaire à travers un écran en un cordonnet approprié en volume et en poids. Le dépôt de la phase pâteuse peut également être effectué à la brosse, au pinceau ou par trempage.

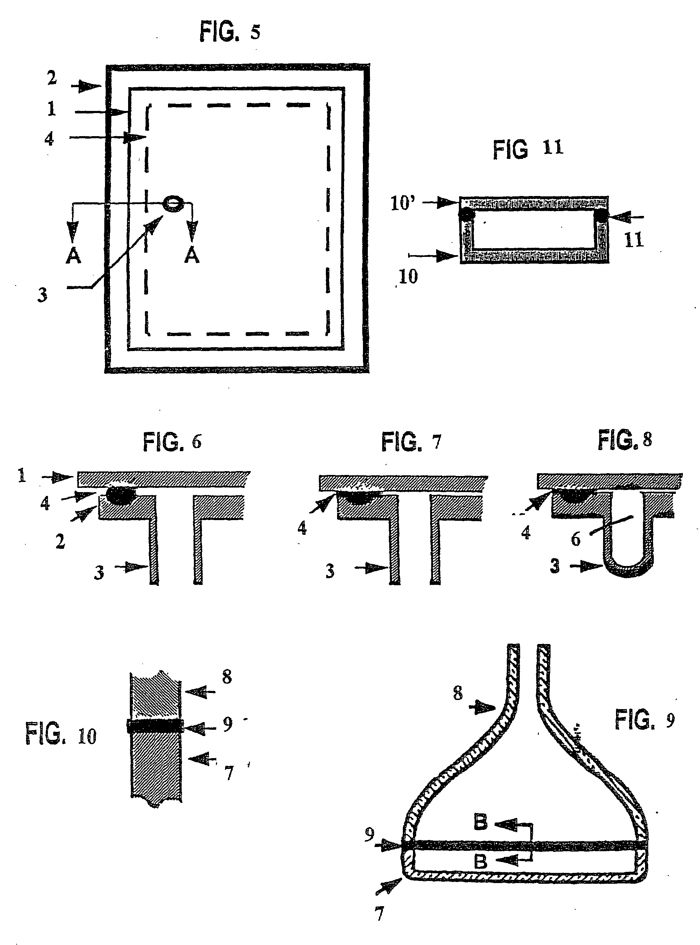

Le scellement hermétique est obtenu par un chauffage à 10°C/minute, depuis 20°C jusqu'à environ 370°C, le maintien à cette température pendant environ 10 minutes, l'élévation thermique par palier de 4-5°C jusqu'au point de consigne de 460°C, le maintien à cette température pendant 40 à 60 minutes et le retour à la température ambiante à la vitesse de 10°C/mn, température à laquelle s'effectue la densification de la fritte ainsi que la volatilisation du véhicule, organique ou non, comme cela est visible à la figure 8.

Dès l'obtention du scellement, on dégaze l'enceinte 6 à l'aide d'une pompe à vide primaire, secondaire ou turbomoléculaire. Puis, on effectue la fusion et le soudage de la cheminée 3.

A la figure 9, on peut voir un tube à rayons cathodiques dont la partie avant plane 7, préalablement instrumentée, a été scellée au cône 8 par une composition de verre de scellement 9 selon l'invention. Les températures de ramollissement pour les verres de scellement étant inférieures ou égales à 460°C, on évite tout risque d'endommagement de la partie instrumentée de cette partie plane.

Le scellement a été réalisé par dépose à plat de la composition sur le fond 7.

A la figure 11, on peut voir un boîtier 10 et son couvercle 10' en alumine, en céramique ou en tout autre matériau approprié constituant après frittage du verre de scellement 11, un « flat pack » ou LIC pour circuit électronique ou microélectronique.

## Revendications

1. Compositions de verres thermiquement dévitrifiables hermétiques sans PbO **caractérisées en ce que** ces compositions pentamoléculaires sont constituées de B₂O₃, ZnO, SrO, SiO₂ et Bi₂O₃, dont le point de ramollissement est ≤460°C, point de ramollissement situé en dessous mais proche de la fusion totale de la fritte,

2. Compositions selon la revendication 1
**caractérisées en ce que** ces compositions seront préférablement dans les proportions suivantes en % et en poids :
| | |
|---|---|
| Bi₂O₃ | 77,7% (en poids) |
| ZnO | 10% " |
| SrO | 2% " |
| SiO₂ | 0,9% " |
| B₂O₃ | 9,4% " |

3. Compositions selon les revendications 1 et 2, sont sous forme de fritte constituée de :
| | |
|---|---|
| Bi₂O₃ | 60 à 85% en poids |
| ZnO | 5 à 25% en poids |
| SrO | 1 à 5% en poids |
| SiO₂ | 0,5 à 5% en poids |
| B₂O₃ | 5 à 20% en poids |

4. Compositions selon l'une des revendications 1 à 3
**caractérisées en ce que** la granulométrie est ≤22 µmètres.

5. Compositions selon l'une des revendications 1 à 4
**caractérisées en ce que** à la fritte sont ajoutés, au moulin, à sec et à 20°C, des oxydes et/ou des non-oxydes ayant la fonction principale de réduire le Coefficient de Dilatation Linéique - CDL - :
| | |
|---|---|
| Cordierite | Sialon α |
| Eucryptite β | Sialon β |
| Nitrure de Silicium | Spodumene β |
| Quartz fondu | Titanate d'Aluminium |
| Zn₂SiO₄ - Willemite | ZrZnSiO₅ |
| Zircone | |

6. Compositions selon la revendication 5
**caractérisées en ce que** le % en poids est de 0,1 à 25.

7. Compositions selon les revendications 1 à 6
**caractérisées en ce que** le CDL est compris entre 60 et 100.10⁻⁷/°C.

8. Compositions selon les revendications 1 à 7
**caractérisées en ce que** la fritte est destinée au scellement hermétique du fond en verre et du cône en verre d'un CRT, d'un Dispositif de Visualisation d'Images à Plasma (Plasma Display Panel) - PDP, d'un Double Vitrage et autres articles similaires.

9. Compositions selon les revendications 1 à 8
**caractérisées en ce que** la fritte est destinée au scellement hermétique des circuits et boîtiers électroniques et microélectroniques tels que LIC, MOS, CCD, VLSI et autres articles similaires.

## Patentansprüche

1. Zusammensetzung von Gläsern, die unter dem Einfluss von Temperatur thrmisch hermetisch ohne PbO kristallisieren. Die pentamolekulare eutektische zusammensetzung besteht von B₂O₃, ZnO, SrO, SiO₂ und Bi₂O₃, entweichungspunkt 460°C ist und unter, aber nahe am Schmelzpunkt liegt.

2. Zusammensetzung nach Patentanspruch 1
**gekennzeichnet durch** die ausschliessliche Zusammenzetsung **gekennzeichnet durch** die ausschiessliche Zusammensetzung in den folgenden Proportionen nach Prozenten und Gewichten:
| | |
|---|---|
| Bi₂O₃ | 77,7% in Gewicht, |
| ZnO | 10 % " |
| SrO | 2 % " |
| SiO₂ | 0,9 % " |
| B₂O₃ | 9,4 % " |

3. Zusammensetzung,nach Patentanspruch von 1 und 2 in form einer Fritte bestehend aus:
| | |
|---|---|
| Bi₂O₃ | 60 bis 85 % in Gewicht, |
| ZnO | 5 bis 25 % " |
| SrO | 1 bis 5 % " |
| SiO₂ | 0,5 bis 5 % " |
| B₂O₃ | 5 bis 20 % " |

4. Zusammensetzung nach einem der Patentanspruch von 1 bis 3 **gekennzeichnet durch** die Korngrösse von circa 22 Mikrometers.

5. Zusammensetzung nach einem der Patentansprüche von 1 bis 4 **gekennzeichnet dadurch, dass** der Fritte in der Glassmühle, in trockenem Zustand und bei 20°C, Oxyde und/oder Nonoxyde beigemengt werden, die die hauptsächliche Funktion haben, den linearen Wärmeausdehnungskoeffizienten (WAK) zu verringern :
Cordierit,
Eukriptit beta
Geschmolzenem Quartz,
Zn₂SiO₄ Wilemit,
ZrO₂
Sialon alpha,
Sialon beta,
Spodunem beta,
Aluminiumtitanat,
ZrZnSiO₅
Al₂O₃

6. Zusammensetzung nach Patentanspruch 5
**gekennzeichnet durch** den Gewichtsprozentsatz zwischen 0,1 bis 25.

7. Zusammensetzung nach Patentanspruch 1 bis 6 betreffend den linearen Wärmeausdehnungskoeffizienten (WAK)zwischen 60 und 100.10⁻⁷ /°C.

8. Zusammensetzung nach Patentanspruch 1 bis 7 bestehend darin, dass die Fritte für die hermetische Verkittung des Glasbodens und des Glaskegels eines Kathodenstrahlenrohrs (KSR) , für die Plasmasichtbarmachung (Plasma Display Panel -PDP-), für eine Doppelverglasung und andere ähnliche Artikel verwendbar ist.

9. Zusammensetzung nach Patentanspruch 1 bis 8 **gekennzeichnet dadurch, dass** die Fritte für die hermetische Verkittung von elektronischen und mikroelektronischen Kreisen und Gehäusen sowie LIC, MOS, CCD, VLSI und andere ähnliche Artikel verwendbar ist.

## Claims

1. Compositions of thermically devitrified glasses hermetic without PbO **characterized by** eutectic pentamolecular compositions made of B₂O₃, ZnO, SrO, SiO₂ and Bi₂O₃ of which the softening point is located under but very close to the complete melting of the frit.

2. Compositions according to claim 1
are **characterized by** that these compositions should be preferably in the following proportions in % and in weight;
| | |
|---|---|
| Bi₂O₃ | 77,7 % in weight |
| ZnO | 10 % " |
| SrO | 2 % " |
| SiO₂ | 0,9 % " |
| B₂O₃ | 9,4 % " |

3. Compositions according to claims 1 and 2
are frits composed of:
| | |
|---|---|
| Bi₂O₃ | 60 to 85% in weight |
| ZnO | 5 to 25% " |
| SrO | 1 to 5% " |
| SiO₂ | 0,5 to 5% " |
| B₂O₃ | 5 to 20% " |

4. Compositions according to claims 1 to 3
are **characterized by** that their granulometry is under or equal 22 micrometers.

5. Compositions according to claims 1 to 4
are **characterized in that** to the frit are added at the mill,dry at ZO°C, oxides and/or non-oxides with the main function of reducing the linear Thermal Expansion Coefficient (TEC) :
| | |
|---|---|
| Cordierite | Sialon alpha |
| Eucryptite beta | Sialon beta |
| Silicon nitride | Spodumene beta |
| Fused quartz | Aluminium titanate |
| Zn₂SiO₄ | ZrZnSiO₅ |
| Zircone | Alumina |

6. Compositions according to claim 5
are **characterized by** the % in weight being 0,1 to 25.

7. Compositions according to claims 1 to 6
are **characterized by** their TEC being contained between 60 and 100.10⁻⁷ /°C.

8. Compositions according to claims 1 to 7
are **characterized in that** the frit is intended to hermetically seal the plate and the funnel of a Cathode Ray Tube (CTR), of a Plasma Display Panel (PDP), of Double glazing and other similar items.

9. Compositions according to claims 1 to 8
are **characterized in that** the frit is intended to seal circuits and electronic housings and microelectronics such as LIC,MOS,CCD,VLSI and other siuilar items.
